# EUROPÄISCHE PATENTSCHRIFT

(11) **EP 3 499 027 B1**
(45) Veröffentlichungstag und Bekanntmachung des Hinweises auf die Patenterteilung: **27.01.2021**
(21) Anmeldenummer: 18211829.9
(22) Anmeldetag: 12.12.2018
(51) Int. Cl.: F03D 13/40, B60P 3/40

(54) **ANORDNUNGEN ZUM TRANSPORT VON ROTORBLÄTTERN EINER WINDTURBINE**
ASSEMBLIES FOR THE TRANSPORT OF ROTOR BLADES OF A WIND TURBINE
DISPOSITIFS DE TRANSPORT DES PALES DE ROTOR D'UNE ÉOLIENNE

(30) Priorität: 13.12.2017 DE 102017011513
(43) Veröffentlichungstag der Anmeldung: 19.06.2019
(73) Patentinhaber: Siemens Gamesa Renewable Energy Service GmbH, 22297 Hamburg (DE)
(72) Erfinder: Lorbach, Severin, 24114 Kiel (DE); Zippel, Florian, 24626 Groß Kummerfeld (DE); Göttsche, Christian, 24802 Groß Vollstedt (DE); Murthy, Chandra Sekhara, 560054 Bangalore (IN)
(74) Vertreter: Glawe, Delfs, Moll

(56) Entgegenhaltungen:
- WO-A1-2017/114530
- US-A1- 2011 131 785
- US-A1- 2014 314 576

## Beschreibung

Die Erfindung bezieht sich auf eine Wurzelrahmenanordnung zum Transport von Rotorblättern für eine Windturbine, die mit der Wurzel eines Windturbinenrotorblatts gekoppelt werden soll sowie eine Anordnung zum Transport von Rotorblättern für eine Windturbine, die die erwähnte Wurzelrahmenanordnung und eine Spitzenklemmanordnung zum Transport von Rotorblättern für eine Windturbine, die um ein Rotorblatt in der Nähe seiner Spitze geklemmt werden soll, umfasst.

Rotorblätter für moderne Windturbinen weisen erhebliche Längen von beispielsweise 100 m oder mehr auf und sind besonders geformt. Sie umfassen einen Flügelprofilabschnitt, der auf Energiegewinnung optimiert ist, und einen kreisförmigen Wurzelbereich zur Befestigung an der Nabe einer Windturbine.

Der Transport derartiger Rotorblätter ohne Beschädigungen vom Herstellungsort an ihren Installationsort stellt eine Herausforderung dar.

Für Onshore-Windturbinen müssen die Rotorblätter auf Straßen transportiert werden, wodurch geeignete Trailer erforderlich werden, auf denen das Rotorblatt sicher und auf eine Art und Weise, die den durch die Transportroute auferlegten Beschränkungen, d. h. Höhen- und Breitenbeschränkungen, die sich aus den zu nutzenden Straßen ergeben, nachkommt, befestigt werden kann.

Für den Seetransport von Rotorblättern ist es üblich geworden, ein Schiff mit einer Menge an Rotorblättern zu beladen, die horizontal und vertikal gestapelt sind, um die Transportkapazität bestmöglich auszunutzen. Dazu muss die Stapelung jedes einzelnen so erfolgen, dass sie selbst bei rauer See robust ist. Darüber hinaus müssen die Rotorblätter, da Schiffe aufgrund von Seegang während der Fahrt zu Verformungen neigen, flexibel gesichert werden, so dass die Verformungen des Schiffs nicht in die Rotorblätter eingebracht werden, was möglicherweise Schäden verursacht.

Aus dem Stand der Technik sind verschiedene Rotorblatthalteanordnungen bekannt, die entweder See- oder Straßentransport gestatten. Aufgrund der Komplexität dieser Systeme sowie unterschiedlicher Anforderungen hinsichtlich der Ausrichtung der Rotorschaufeln für den Transport und/oder die Stapelung sind die bekannten Systeme entweder für den See- oder den Straßentransport konfiguriert. Somit muss im Falle einer gemischten Transportroute, die sowohl See- als auch Straßentransport umfasst, das Haltesystem eines Rotorblatts zwischen zwei verschiedenen Transportabschnitten ausgetauscht werden. Dieser Austausch ist zeit- und arbeitsintensiv und stellt auch ein beträchtliches Risiko einer Beschädigung des Rotorblatts dar.

Das Dokument US 2014/314576 A1 betrifft Halterungen für Rotorblätter von Windenergieanlagen mit einem Wurzelrahmen und einer Klemmanordnung mit einer Klemme und zwei möglichen Ausführungen von Spitzenrahmen. Hierbei ist eine vertikale oder eine horizontale Ausrichtung des eingeklemmten Rotorblatts möglich.

Eine Aufgabe der vorliegenden Erfindung besteht darin, verbesserte Transportanordnungen für Windturbinenrotorblätter bereitzustellen.

Diese Aufgabe wird durch die Wurzelrahmenanordnung nach Anspruch 1 gelöst. Bevorzugte Ausführungsformen sind Gegenstand der abhängigen Ansprüche.

Die Erfindung betrifft eine Wurzelrahmenanordnung zum Transport von Rotorblättern für eine Windturbine, die mit der Wurzel eines Windturbinenrotorblatts gekoppelt werden soll, die Folgendes umfasst:
- einen Straßentransportrahmen, der dazu konfiguriert ist, mit der Wurzel eines Windturbinenrotorblatts gekoppelt zu werden, Befestigungspunkte zur Befestigung des Straßentransportrahmens an einem Ladebett eines Straßenfahrzeugs auf der unteren Seite des Rahmens bereitstellt und eine Befestigungsmittellinie zwischen der unteren und der oberen Seite des Rahmens senkrecht zur virtuellen Linie, die die Befestigungspunkte an der unteren Seite verbindet, umfasst; und
- einen Seetransportrahmen, der lösbar mit dem Straßentransportrahmen verbunden ist, Befestigungspunkte zur Befestigung des Seetransportrahmens an einem Ladebett eines Seefahrzeugs auf der unteren Seite des Rahmens bereitstellt und eine Befestigungsmittellinie zwischen der unteren und der oberen Seite des Rahmens senkrecht zur virtuellen Linie, die die Befestigungspunkte verbindet, umfasst;
wobei die Befestigungsmittellinie des Straßentransportrahmens im Wesentlichen senkrecht zur Befestigungsmittellinie des Seetransportrahmens bei Verbindung damit ist.

Des Weiteren wird eine Spitzenklemmanordnung zum Transport von Rotorblättern für eine Windturbine offenbart, die um ein Rotorblatt in der Nähe der Spitze des Rotorblatts geklemmt werden soll, die Folgendes umfasst:
- eine Klemme mit zwei Klemmenhälften, die jeweils eine Kontaktfläche aufweisen, die zum formschlüssigen Klemmen des Rotorblatts zwischen die beiden Klemmenhälften an die Form des Rotorblatts angepasst ist; und
- einen Seetransportspitzenrahmen, der Befestigungspunkte zur Befestigung des Seetransportspitzenrahmens an einem Ladebett eines Seefahrzeugs auf der unteren Seite des Rahmens bereitstellt und dazu konfiguriert ist, die Klemme derart lösbar aufzunehmen, dass das Profil des eingeklemmten Rotorblatts im Wesentlichen vertikal ausgerichtet ist;
   oder
- einen Straßentransportspitzenrahmen, der Befestigungspunkte zur Befestigung des Straßentransportspitzenrahmens an einem Ladebett eines Straßenfahrzeugs auf der unteren Seite des Rahmens bereitstellt und dazu konfiguriert ist, die Klemme derart lösbar aufzunehmen, dass das Profil des eingeklemmten Rotorblatts im Wesentlichen horizontal ausgerichtet ist.

Darüber hinaus betrifft die Erfindung eine Anordnung zum Transport von Rotorblättern für eine Windturbine, die eine Wurzelrahmenanordnung gemäß der vorliegenden Erfindung und eine Spitzenklemmanordnung gemäß der vorliegenden Offenbarung umfasst.

Vor der genaueren Erläuterung der Erfindung werden einige hier verwendete Begriffe definiert.

Eine Komponente befindet sich "in der Nähe der Spitze" eines Rotorblatts, wenn der Abstand zwischen der Komponente und der Rotorblattspitze weniger als der Abstand, vorzugsweise weniger als die Hälfte des Abstands, zwischen der Komponente und der Wurzel des Rotorblatts beträgt.

Das Profil eines Rotorblatts ist "horizontal ausgerichtet", wenn der horizontale Abstand zwischen der Vorderkante und der Hinterkante des Rotorblatts größer als der vertikale Abstand zwischen den Kanten ist. Entsprechend ist das Profil eines Rotorblatts "vertikal ausgerichtet", wenn der vertikale Abstand zwischen der Vorderkante und der Hinterkante des Rotorblatts größer als der horizontale Abstand zwischen den Kanten ist. Die Differenz zwischen dem horizontalen und dem vertikalen Abstand kann in jedem Fall vorzugsweise in einer Größenordnung liegen. Die Richtungen "horizontal" und "vertikal" beziehen sich auf eine ordnungsgemäße Verwendung der offenbarten Anordnung, d. h. auf einen Zustand, in dem die Anordnungen z. B. auf einem Ladebett ordnungsgemäß aufgebaut sind.
Eine "virtuelle Linie, die Befestigungspunkte verbindet" kann auch eine virtuelle Ebene sein, falls die zu verbindenden Punkte nicht vollkommen ausgerichtet sind.

Die Wurzelrahmenanordnung gemäß der Erfindung kombiniert einen Straßentransportrahmen und einen Seetransportrahmen, wobei ersterer zur direkten Kopplung mit dem Windturbinenrotorblatt konfiguriert ist und letzterer lösbar mit dem Straßentransportrahmen verbunden wird. Beide Rahmen weisen eine Befestigungsmittellinie auf, die vertikal ausgerichtet ist, wenn der jeweilige Rahmen mit seinen Befestigungspunkten ordnungsgemäß auf einem geeigneten Ladebett befestigt ist. Für den Straßentransport wird der Seetransportrahmen gelöst und das Rotorblatt wird mit dem Straßentransportrahmen gekoppelt, so dass sein Profil bei Befestigung auf dem Ladebett eines Straßenfahrzeugs, z. B. des Trailers eines Lkw, allgemein horizontal ausgerichtet ist.

Für den Seetransport wird das Rotorblatt analog mit dem Straßentransportrahmen gekoppelt. Jedoch ist der Straßentransportrahmen in diesem Fall mit dem Seetransportrahmen verbunden, wobei die Befestigungsmittellinie des Straßentransportrahmens im Wesentlichen senkrecht zum Straßentransportrahmen ist. Dadurch ist, wenn der Seetransportrahmen an dem Ladebett eines Schiffs befestigt ist, das Profil eines zur horizontalen Ausrichtung für den Straßentransport mit dem Straßentransportrahmen gekoppelten Rotorblatts nun allgemein vertikal ausgerichtet, wobei es sich um die bevorzugte Ausrichtung für den Seetransport handelt. Ob die Vorder- oder die Hinterkante des Rotorblatts nach oben zeigt, hängt einzig von der Ausrichtung des Straßentransportrahmens, wenn er mit dem Seetransportrahmen verbunden wird, ab.

Die erfinderische Wurzelrahmenanordnung bietet den Vorteil, dass sowohl See- als auch Straßentransport möglich ist, ohne beim Wechsel zwischen See- und Straßentransport erneutes Koppeln eines Rotorblatts mit einem neuen Transportrahmen zu erfordern. Stattdessen bleibt der Straßentransportrahmen die gesamte Zeit mit dem Rotorblatt gekoppelt und wird lediglich für einen Transportabschnitt auf einem Schiff durch den Seetransportrahmen ergänzt. Da die lösbare Verbindung zwischen den beiden Transportrahmen für genau diesen Zweck konstruiert werden kann, kann die Verbindung des Seetransportrahmens mit dem Straßentransportrahmen und somit das Gestatten eines Wechsels zwischen Straßen- und Seetransport im Vergleich zum Entkoppeln eines ersten Transportrahmens für den Straßentransport von dem Rotorblatt und Koppeln eines neuen zweiten Transportrahmens für den Seetransport, wie dies im Stand der Technik erforderlich ist, merklich vereinfacht werden.

Natürlich eignet sich die erfinderische Wurzelrahmenanordnung auch zur zeitweisen Lagerung von Rotorblättern. Dazu kann der Seetransportrahmen mit dem Straßentransportrahmen gekoppelt werden oder nicht gekoppelt werden.

Vorzugsweise ist die obere Seite des Seetransportrahmens und/oder des Straßentransportrahmens mit Verbindungspunkten versehen, um eine Verbindung mit Befestigungspunkten eines anderen Seetransportrahmens und/oder des Straßentransportrahmens zur vertikalen Stapelung zu gestatten. Im Allgemeinen kann die Stapelung entweder mit dem Straßentransportrahmen oder dem Seetransportrahmen erfolgen.

Zusätzlich oder alternativ dazu kann bzw. können der Seetransportrahmen und/oder der Straßentransportrahmen Befestigungspunkte zur Befestigung des jeweiligen Rahmens an einem Ladebett auf der oberen Seite des Rahmens bereitstellen, wobei die virtuelle Linie, die diese Befestigungspunkte verbindet, zur jeweiligen Befestigungsmittellinie senkrecht ist. In diesem Fall kann bzw. können der Seetransportrahmen und/oder der Straßentransportrahmen verkehrt herum auf einem Ladebett befestigt werden.

Wenn ein Rahmen an seiner oberen Seite sowohl Verbindungspunkte als auch Befestigungspunkte umfasst, können diese zu jeweiligen kombinierten Verbindungs- und Befestigungspunkten zusammengefasst werden.

Vorzugsweise ist mindestens ein Befestigungs- oder Verbindungspunkt als eine Aufnahme zur Aufnahme eines Verbindungsstifts konfiguriert, die vorzugsweise Mittel zur Sicherung des Stifts in der Aufnahme umfasst. Der Verbindungsstift kann austauschbar sein und kann somit an die jeweilige Funktion angepasst werden, d. h. eine sichere Befestigung auf einem Ladebett gestatten oder eine sichere Verbindung zwischen zwei Transportrahmen herstellen. Bei dem Mittel zur Sicherung des Stifts in der Aufnahme kann es sich um einen Verriegelungsstift handeln, der senkrecht durch den Verbindungsstift hindurchgeht.

Ein Verbindungsstift, der in einer Aufnahme eines Befestigungs- oder Verbindungspunkts vorgesehen werden soll, kann mindestens ein Querloch zur Befestigung von Hebezeug daran aufweisen. Falls derartige Verbindungsstifte in den Verbindungs- und/oder Befestigungspunkten auf der oberen Seite eines Transportrahmens vorgesehen sind, können diese Verbindungsstifte als ein Verankerungspunkt zur Verbindung von Hebezeug eines Krans damit dienen.

Vorzugsweise umfasst ein Verbindungsstift einen mittigen Bereich, der im Gebrauch nicht von den Rahmen, die mit dem Stift verbunden sind, bedeckt wird, so dass er von einem Brückenverbindungsstück zur horizontalen Verbindung benachbarter Wurzelrahmenanordnungen umschlossen werden kann. Beispielsweise ist der Durchmesser des Verbindungsstifts in dem mittigen Bereich größer als in jenen Bereichen, die in die Aufnahmen der Verbindungspunkte eingeführt werden sollen, wodurch das Einführen des mittigen Bereichs in eine Aufnahme vermieden wird. Ein Brückenverbindungsstück kann ringförmige Endbereiche zum jeweiligen individuellen Umschließen des mittigen Bereichs eines Verbindungsstifts umfassen, wobei die ringförmigen Endbereiche durch ein Verbindungsbrückenstück, dessen Länge einstellbar ist, miteinander verbunden sind.

Vorzugsweise ist die Verbindung zwischen dem Straßentransportrahmen und dem Seetransportrahmen dahingehend konstruiert, eine Schwenkbewegung um eine horizontale Achse von bis zu mindestens 3 Grad zu gestatten. Beispielsweise können die beiden Transportrahmen durch eine Achse, deren Achse senkrecht zur Befestigungsmittellinie des Seetransportrahmens verläuft, schwenkverbunden sein. Diese Schwenkbewegung ist für den Seetransport nützlich, um negative Auswirkungen z. B. eines starken Seegangs von dem Rotorblatt fernzuhalten.

Um den Einsatz der erfinderischen Wurzelrahmenanordnung bei vielzähligen Rotorblattarten zu gestatten, wird bevorzugt, dass die Wurzel einer Windturbine durch austauschbare Adapter mit dem Straßentransportrahmen verbunden wird. Die zu verwendenden Adapter können je nach zu transportierendem Rotorblatt ausgewählt werden.

Vorzugsweise sind der Straßentransportrahmen und der Seetransportrahmen dahingehend dimensioniert, in einen standardmäßigen ISO-Container zu passen, vorzugsweise beträgt die Breite der unteren und der oberen Seite des Transportrahmens weniger als die Ladebreite eines standardmäßigen ISO-Containers. Durch die entsprechende Beschränkung der Größe des Transportrahmens wird für einen problemlosen Transport des Straßen- und des Seetransportrahmens, wenn diese nicht im Gebrauch sind, gesorgt, zumindest wenn der Straßentransportrahmen von dem Seetransportrahmen gelöst ist.

Die Offenbarung bezieht sich des Weiteren auf eine Spitzenklemmanordnung. Die eigentliche Klemme kann alternativ mit einem Seetransportspitzenrahmen oder einem Straßentransportspitzenrahmen, die dazu konstruiert sind, die Klemme und somit ein eingeklemmtes Rotorblatt in der für den Transportmodus erforderlichen Ausrichtung zu halten, z. B. mit für den Seetransport vertikal ausgerichtetem und für den Straßentransport horizontal ausgerichtetem Rotorblattprofil, verbunden werden. Die Klemme selbst bleibt an dem Rotorblatt, selbst wenn der Transportmodus gewechselt wird. In diesem Fall muss die Klemme lediglich mit einem anderen Spitzenrahmen verbunden werden, ohne dass heikle Arbeitsschritte des Entfernens und Anbringens einer neuen Klemme an das Rotorblatt erforderlich werden.

Falls die Klemme mit dem Seetransportspitzenrahmen verbunden wird, wird diese Verbindung vorzugsweise dazu konfiguriert, eine Schwenkbewegung parallel zur virtuellen Linie zwischen den Befestigungspunkten des Seetransportspitzenrahmens bis zu 6 Grad und/oder eine translatorische Bewegung von bis zu 10 cm in der Längenrichtung des eingeklemmten Rotorblatts zu gestatten. Diese Beweglichkeit kann durch eine Achse parallel zu der virtuellen Linie zwischen den Befestigungspunkten des Seetransportspitzenrahmens, die in einem Schlitz geführt wird, erzielt werden.

Gleichermaßen wird bei Verbindung mit dem Straßentransportspitzenrahmen die Verbindung zwischen der Klemme und dem Straßentransportspitzenrahmen vorzugsweise dazu konfiguriert, eine Schwenkbewegung parallel zur virtuellen Linie zwischen dem Befestigungspunkten des Straßentransportspitzenrahmens von bis zu 6 Grad zu gestatten.

Diese Maßnahmen helfen dabei, unerwünschte Belastungen entweder während des See- oder des Straßentransports von dem Rotorblatt fernzuhalten.

Die erfindungsgemäße Anordnung zum Transport von Rotorblättern für eine Windturbine stellt eine Kombination einer erfinderischen Wurzelrahmenanordnung mit einer Spitzenklemmanordnung dar. Für Einzelheiten wird somit auf Obiges verwiesen.
Die Erfindung wird nun im Hinblick auf die beiliegenden Figuren genauer beschrieben:
- Figur 1:: Eine beispielhafte Ausführungsform eine Anordnung zum Transport von Rotorblättern für eine Windturbine;
- Figur 2:: eine detaillierte Ansicht der Wurzelrahmenanordnung von Figur 1;
- Figur 3:: eine isolierte Ansicht der Wurzelrahmenanordnung von Figur 2;
- Figur 4a,b:: detaillierte Ansichten der Verbindung zwischen dem See- und dem Stra-ßentransportrahmen der Anordnung von Figur 3;
- Figur 5a-c:: detaillierte Ansichten der Verbindungspunkte der Anordnung von Figur 3;
- Figur 6:: eine schematische Zeichnung verschiedener Adapter zur Verwendung mit der Anordnung von Figur 3;
- Figur 7:: eine isolierte Ansicht der Spitzenklemmanordnung von Figur 1;
- Figur 8a-c:: eine beispielhafte Verwendung der Anordnung von Figur 1 für den Stra-ßentransport; und
- Figur 9:: eine isolierte Ansicht der Spitzenklemmanordnung von Figur 8.

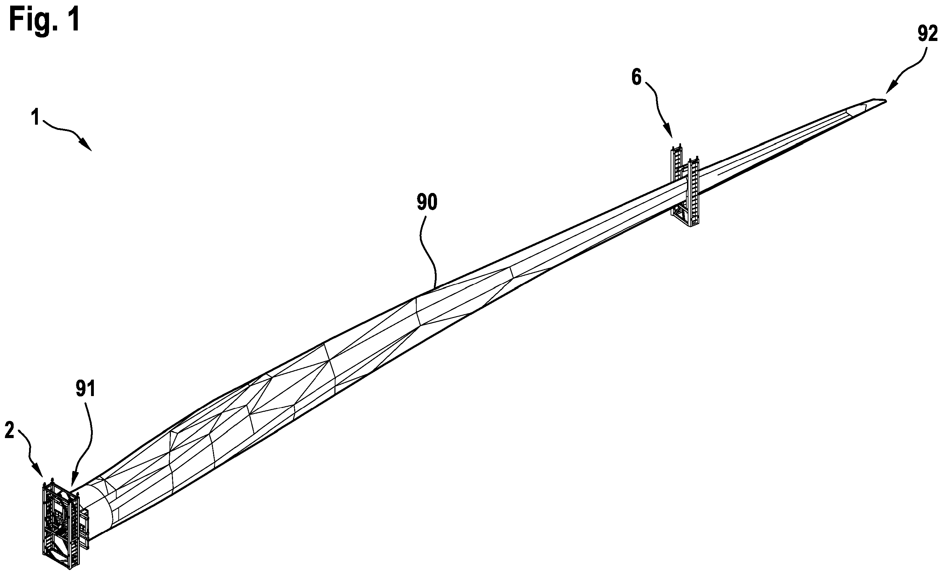

Figur 1 zeigt eine Anordnung 1 zum Transport von Rotorblättern für eine Windturbine gemäß der Erfindung. Die Anordnung 1 wird im Gebrauch gezeigt, d. h. mit in der Anordnung 1 gehaltenem Rotorblatt 90. Sie umfasst eine Wurzelrahmenanordnung 2, die mit der Wurzel 91 des Rotorblatts 90 gekoppelt ist, sowie eine Spitzenklemmanordnung 6, die um das Rotorblatt 90 in der Nähe seiner Spitze 92 geklemmt ist. Figur 1 stellt die Anordnung 1 in einer Konfiguration für den Seetransport, wobei das Profil des Rotorblatts 90 vertikal ausgerichtet ist, dar.

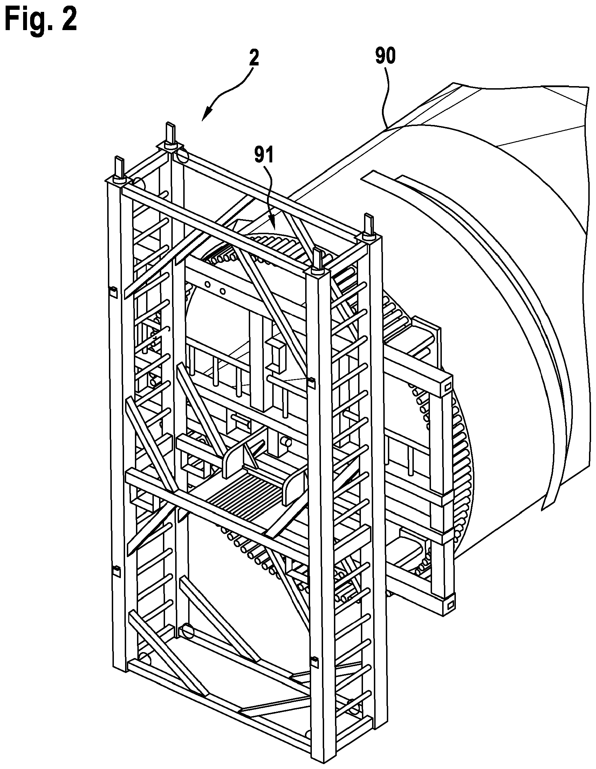

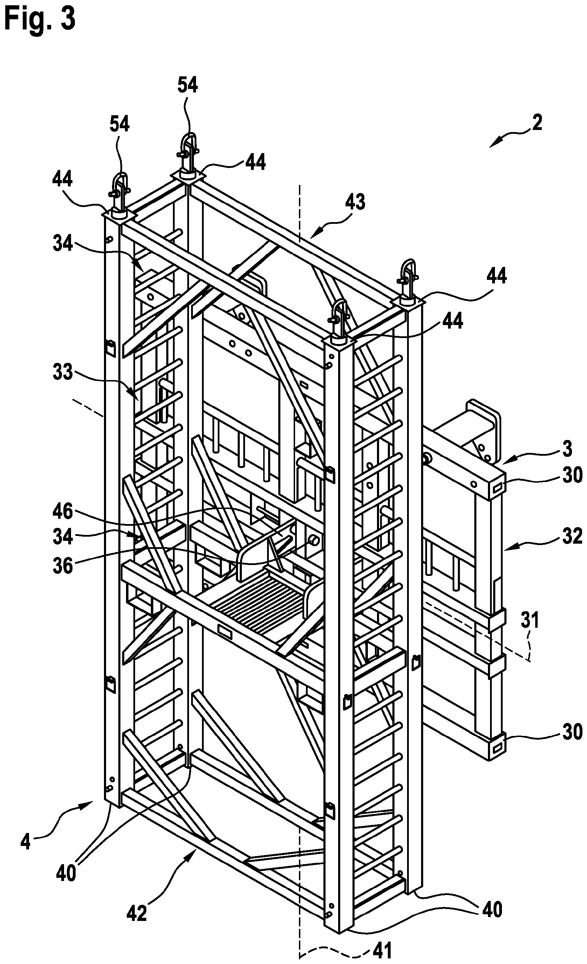

Figur 2 und 3 zeigen detaillierte Ansichten der Wurzelrahmenanordnung 2 von Figur 1, einmal mit damit gekoppeltem Rotorblatt 90 und einmal ohne damit gekoppeltes Rotorblatt 90.

Die Wurzelrahmenanordnung 2 umfasst einen Straßentransportrahmen 3 und einen Seetransportrahmen 4, die miteinander verbunden sind.

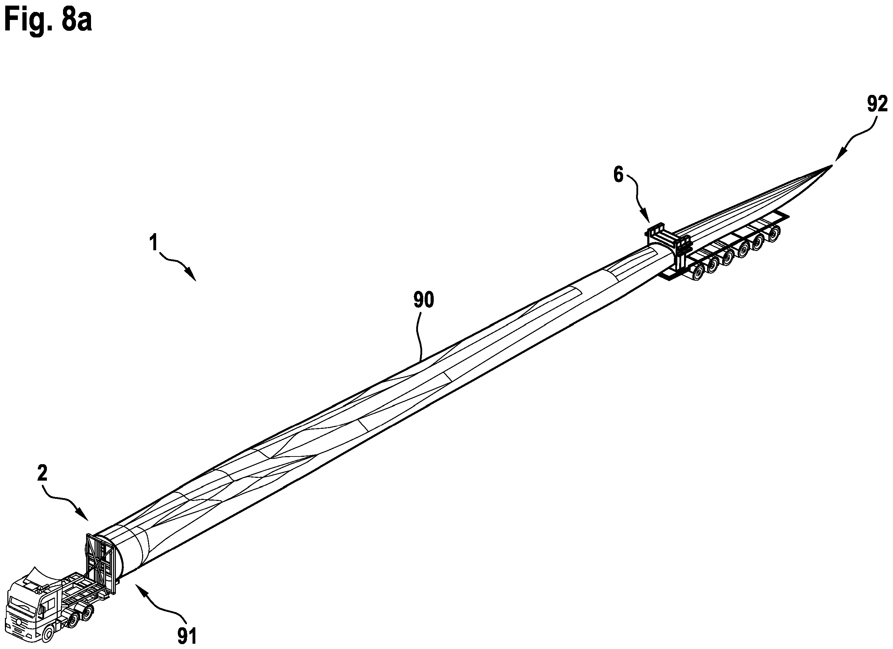

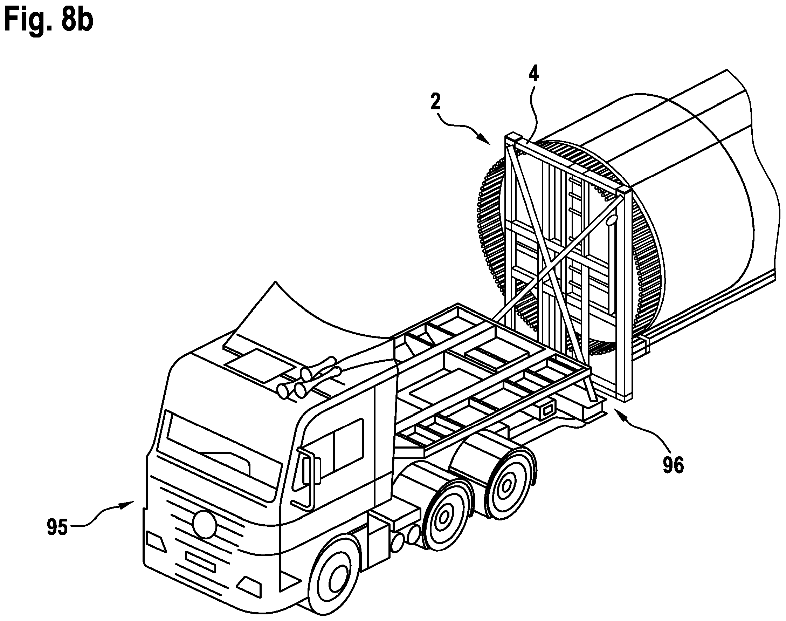

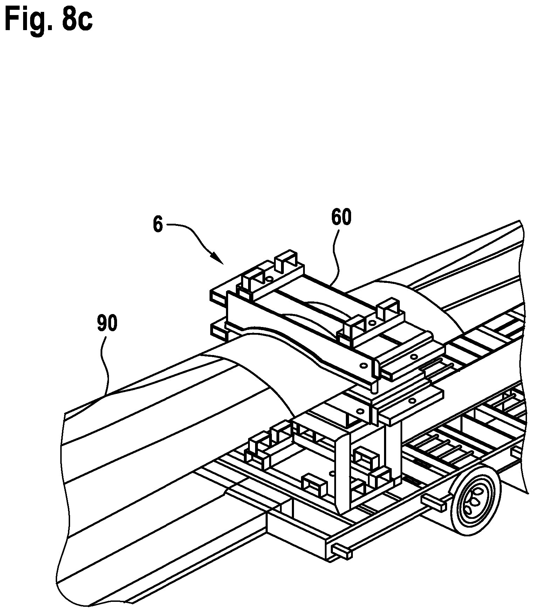

Der Straßentransportrahmen 3 ist dazu konfiguriert, mit der Wurzel 91 eines Windturbinenrotorblatts 90 gekoppelt zu werden. Auf der unteren Seite 3 2. Rahmens 3 gibt es zwei Befestigungspunkte 30 zur Befestigung des Straßentransportrahmens 3 an einem Ladebett eines Straßenfahrzeugs, wie später unter Bezugnahme auf Figur 8 erläutert wird. Die beiden Befestigungspunkte 30 definieren die Befestigungsmittellinie 31, die von der unteren Seite 3 2.

Rahmens 3 zu seiner oberen Seite 33 verläuft und zur virtuellen Linie, die die beiden Befestigungspunkte 30 verbindet, senkrecht ist.

An der oberen Seite 33 des Straßentransportrahmens 3 gibt es zwei Verbindungspunkte 34, die analog zu den Befestigungspunkten 30 auf der unteren Seite 32 konfiguriert sind, um eine umgedrehte Befestigung des Straßentransportrahmens 3 an einem Ladebett eines Straßenfahrzeugs zu gestatten. Gleichzeitig gestatten die Verbindungs- und Befestigungspunkten 30, 34, das zwei Straßentransportrahmen 3 beispielsweise für eine gestapelte Lagerung der Rotorblättern 90 aufeinander platziert werden. Die Verbindungs- und Befestigungspunkte 30, 34 sind als Aufnahmen zur Aufnahme von Verbindungsstiften, die z. B. entweder zur Verbindung von zwei Straßentransportrahmen 3 miteinander oder zur Befestigung eines Straßentransportrahmen 3 an einem Ladebett eines Fahrzeugs geeignet sind, konfiguriert.

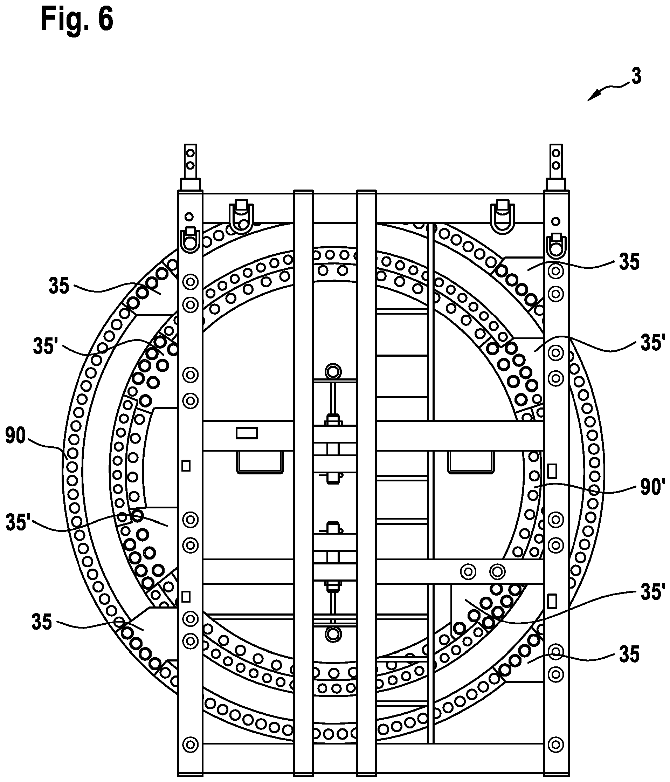

Zum Koppeln des Straßentransportrahmen 3 mit der Wurzel 91 eines Rotorblatts 90 werden Adapter 35 verwendet. An einem Ende sind die Adapter 35 lösbar mit dem Straßentransportrahmen 3 verbunden, wohingegen an dem anderen Ende Kopplungspunkte für die eigentliche Kopplung mit der Wurzel 91 des Rotorblatts 90 bereitgestellt werden. Wie in Figur 6 schematisch dargestellt wird, gestatten die Adapter 35 die Verwendung des Straßentransportrahmens 3 für verschiedene Arten von Rotorblättern 90, von denen zwei zu Veranschaulichungszwecken in Figur 6 parallel gezeigt werden. Während die Adapter 35 für das Rotorblatt 90 gemäß der Darstellung in Figur 1 geeignet sind, kann ein anderer Satz Adapter 35' dafür sorgen, dass sich der Straßentransportrahmen 3 für die Kopplung mit einem Rotorblatt 90' einer anderen Art eignet.

Mit Rückbezug auf Figur 2 und 3 ist der Straßentransportrahmen 3 mit dem Seetransportrahmen 4 lösbar verbunden.

Ähnlich dem Straßentransportrahmen 3 umfasst der Seetransportrahmen 4 Befestigungspunkte 40 auf seiner unteren Seite 42 zur Befestigung des Seetransportrahmens 4 an einem Ladebett z. B. eines Schiffs. Die Befestigungspunkte 40 definieren die Befestigungsmittellinie 41, die von der unteren Seite 4 2. Rahmens 4 zu seiner oberen Seite 42 verläuft und senkrecht zu der virtuellen Linie oder eher Ebene, die die Befestigungspunkte 40 verbindet, ist.

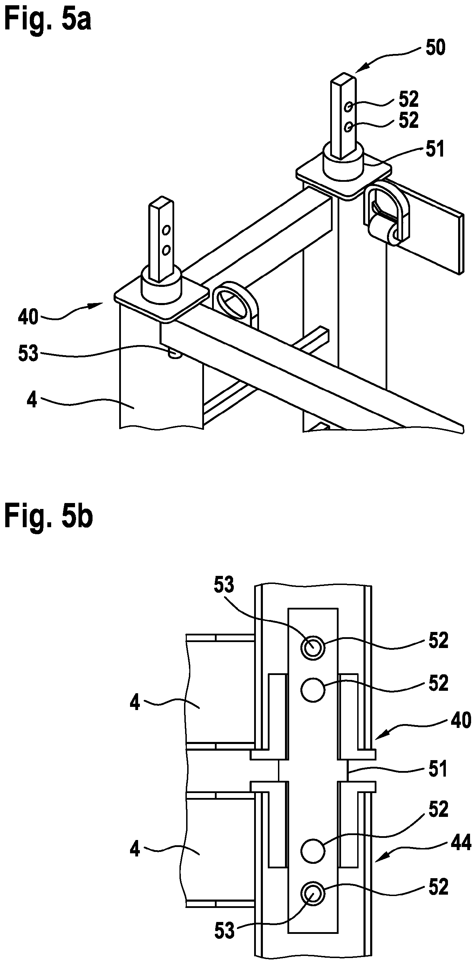

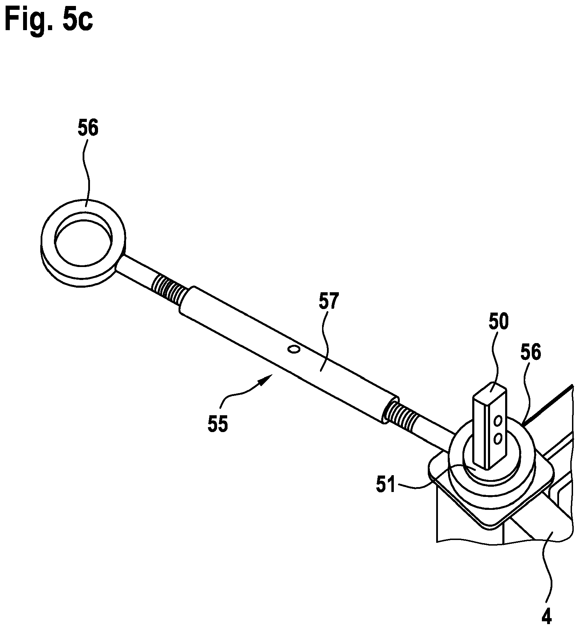

Auf seiner oberen Seite 43 weist der Seetransportrahmen 4 Verbindungspunkte 44 auf, die eine Verbindung mit Befestigungspunkten 40 eines anderen Seetransportrahmen 4 zur Stapelung der Straßentransportrahmen 4 und somit der damit gekoppelten Rotorblätter 90 gestatten. Die Verbindungspunkte 44 sowie die Befestigungspunkte 40 sind als Aufnahme zur Aufnahme von Verbindungs- oder Befestigungsstiften 50, die später unter Bezugnahme auf Figur 5 erläutert werden, konstruiert.

Der Straßentransportrahmen 3 ist derart mit dem Seetransportrahmen 4 verbunden, dass die Befestigungsmittellinien 31, 41 der beiden Rahmen 3, 4 senkrecht zueinander sind. Dadurch ist das Profil des Rotorblatts 90, das derart mit dem Straßentransportrahmen 3 gekoppelt ist, dass das Profil des Rotorblatts 90 während des Straßentransports horizontal ausgerichtet ist, vertikal ausgerichtet, wenn der Straßentransportrahmen 3 an dem Seetransportrahmen 4 befestigt ist. Ob die Vorder- oder die Hinterkante des Rotorblatts 90 bei dieser Konfiguration nach oben zeigt, hängt einzig von der Ausrichtung des Straßentransportrahmens 3, wenn er mit dem Seetransportrahmen 4 verbunden wird, ab.

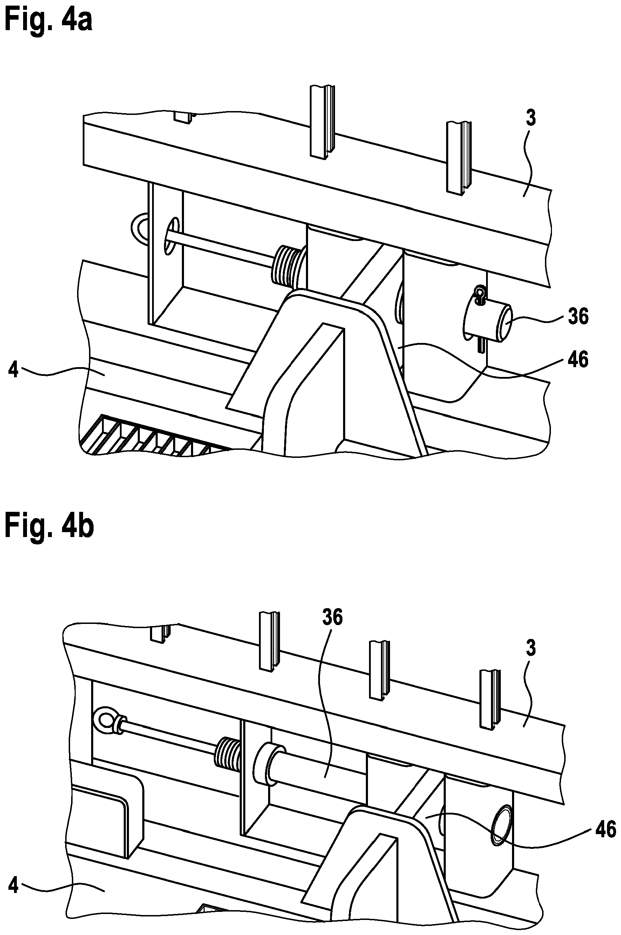

Die Verbindung zwischen dem Straßentransportrahmen 3 und dem Seetransportrahmen 4 ist eine Schwenkverbindung, die dadurch erzielt wird, dass zwei kurze Achsen 36 an dem Straßentransportrahmen 3 mit zwei Aufnahmen 46 an dem Seetransportrahmen 4 zusammenwirken, wie in Figur 4a gezeigt wird. Die Achsen 36 verlaufen parallel zur Befestigungsmittellinie 31 des Straßentransportrahmens 3 und gestatten somit - bei Verbindung mit dem Seetransportrahmen 4 - eine Schwenkbewegung um eine horizontale Achse.

Wie in Figur 4b gezeigt wird, sind die Achsen 36 in einer Längsrichtung beweglich und gestatten somit ein schnelles und problemloses Herstellen und Lösen der Verbindung zwischen dem Straßen- und dem Seetransportrahmen, 4.

In Figur 5 sind die Verbindungspunkte 44 des Seetransportrahmens 4 genauer dargestellt. Die folgenden Erläuterungen treffen jedoch analog auf die Verbindungspunkte 33 des Straßentransportrahmens 3 sowie die jeweiligen Befestigungspunkte 30, 40 zu, zumindest wenn die Rahmen 3, 4 gestapelt sind.

Wie zuvor erwähnt wird, sind die Verbindungspunkte 44 als Aufnahmen zur Aufnahme von Verbindungsstiften 50 konstruiert. Die Stifte 50 umfassen einen mittigen Bereich 51 mit einem im Vergleich zu den restlichen Teilen stärkeren Durchmesser. Auf beiden Seiten des mittigen Bereichs 51 ist der Stift 50 mit Durchgangslöchern 52 versehen. Diese Durchgangslöcher 52 können als eine Führung für einen Verriegelungsstift 53 zur Sicherung des Stifts 5 in der Aufnahme eines Verbindungspunkt 44 oder zur Befestigung eines Hebezeugs 54 daran dienen (siehe Figur 3).

Aufgrund dessen, dass der mittige Bereich 51 einen größeren Durchmesser aufweist, wird dieser Bereich nicht von zwei gestapelten Rahmen 4, die durch den Stift 50 miteinander verbunden sind, abgedeckt, wie in Figur 5b dargestellt wird. Somit kann der mittige Bereich 51 als Verankerungspunkte für Brückenverbindungsstücke 55 gemäß der Darstellung in Figur 5c verwendet werden. Die Brückenverbindungsstücke 55 umfassen zwei ringförmige Bereiche 56 an ihren jeweiligen Enden, die durch ein in der Längsrichtung einstellbares Verbindungsbrückenstück 57 verbunden sind. Die ringförmigen Bereiche 56 sind dazu konfiguriert, den mittigen Bereich 51 der Verbindungsstifte 50 zu umschließen und gestatten somit eine problemlose Verbindung zweier benachbarter Stapel von Transportrahmen 3, 4 bzw. Wurzelrahmenanordnungen 1.

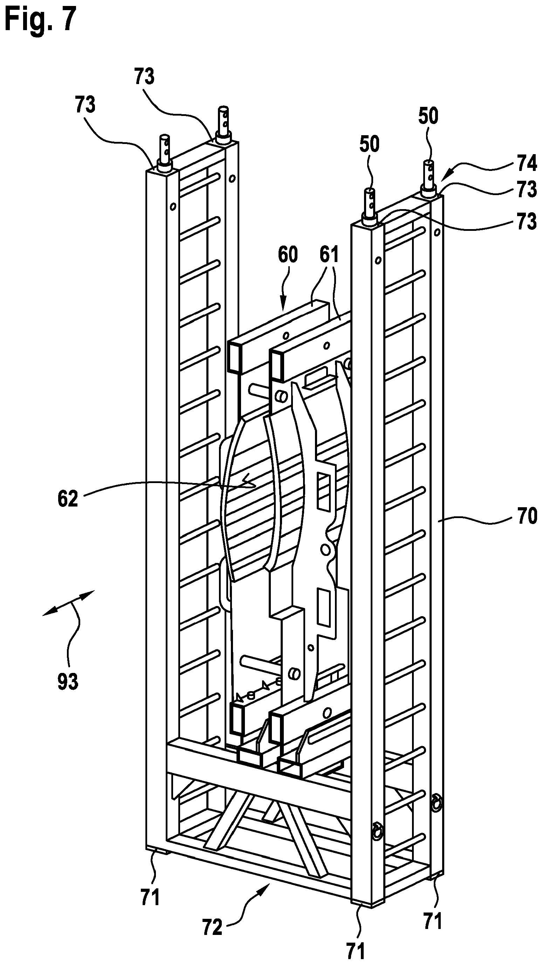

Figur 7 zeigt die Spitzenklemmanordnung 6 von Figur 1, d. h. in einer Konfiguration, die sich für den Seetransport eignet, wobei der Straßentransportrahmen 3 der Wurzelrahmenanordnung 1 mit dem Seetransportrahmen 4 verbunden ist, so dass das Profil des Rotorblatts 90 vertikal ausgerichtet ist.

Die Spitzenklemmanordnung 6 umfasst eine Klemme 60 mit zwei Klemmenhälften 61, die jeweils eine Kontaktfläche 62 aufweisen, die dahingehend an die Form des Rotorblatts 90 angepasst ist, formschlüssiges Klemmen des Rotorblatts 90 zu gestatten.

Bei der Konfiguration von Figur 7 ist die Klemme 60 mit einem Seetransportspitzenrahmen 70 mit Befestigungspunkten 71 zur Befestigung des Seetransportspitzenrahmens 70 mit einem Ladebett eines Seefahrzeugs auf der unteren Seite 72 des Rahmens 70 verbunden. Ähnlich dem Seetransportrahmen 4 weist der Seetransportspitzenrahmen 70 Verbindungspunkte 73 auf seiner oberen Seite 74 auf, um das Stapeln von Seetransportrahmen 4 zu gestatten. Die Befestigungspunkte 71 und Verbindungspunkte 73 sind als Aufnahmen für die Verbindungsstifte 50 konstruiert. Zur weiteren Erläuterung wird auf die Erläuterungen zu Figur 5 verwiesen, die analog auf den Seetransportspitzenrahmen 70 zutreffen.

Die Verbindung zwischen der Klemme 60 und dem Seetransportspitzenrahmen 70 ist dazu konfiguriert, eine Schwenkbewegung parallel zur virtuellen Linie oder eher Ebene zwischen den Befestigungspunkten 71 des Seetransportspitzenrahmens 70 sowie eine translatorische Bewegung in Richtung 93 der Länge des eingeklemmten Rotorblatts zu gestatten. Dies wird durch eine parallel zur Ebene verlaufende Achse (nicht sichtbar), die in Langlöchern geführt wird, erzielt.

Figur 8 zeigt die Anordnung 1 zum Transport von Rotorblättern für eine Windturbine von Figur 1 in einer Konfiguration für den Straßentransport. Figur 8a zeigt die komplette Konfiguration, wohingegen Figur 8b und c detaillierte Ansichten der Wurzelrahmenanordnung 2 bzw. der Spitzenklemmanordnung 6 sind.

In Figur 8 ist der Seetransportrahmen 4 der Wurzelrahmenanordnung 2 weggelassen. Stattdessen ist der Straßentransportrahmen 3 direkt auf dem Ladebett 96 des Lkw 95 befestigt. Dadurch ist das Profil des Rotorblatts 90, das in Figur 1 vertikal ausgerichtet war, nun horizontal ausgerichtet.

Gleichermaßen muss die Klemme 60 der Spitzenklemmanordnung 6 anders als in Figur 1 ausgerichtet sein. Dies wird durch Verbinden der Klemme 60 mit einem Straßentransportspitzenrahmen 80 anstatt des Seetransportspitzenrahmens 70 von Figur 1 und 7 erzielt. Bei Wechsel von der See- zu der Straßentransportkonfiguration oder umgekehrt bleibt die Klemme 60 jedoch an dem Rotorblatt 90 und lediglich der Spitzenrahmen 60, 70 wird ausgetauscht.

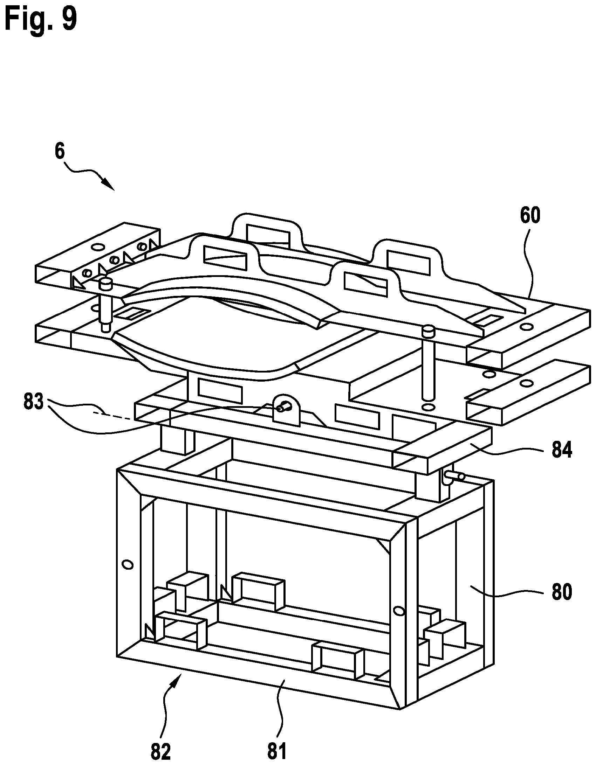

In Figur 9 wird die Spitzenklemmanordnung 6 mit dem Straßentransportspitzenrahmen 80 genauer gezeigt.

Der Straßentransportspitzenrahmen 80 stellt Befestigungspunkte 81 zur Befestigung des Straßentransportspitzenrahmens 80 an dem Ladebett 96 eines Straßenfahrzeugs 95 auf der unteren Seite 82 des Rahmens 81 bereit. Konfigurationsgemäß wird die Klemme 60 derart lösbar aufgenommen, dass das Profil eines eingeklemmten Rotorblatts 90 im Wesentlichen horizontal ausgerichtet ist.

Die Verbindung zwischen der Klemme 60 und dem Straßentransportspitzenrahmen 80 ist dazu konfiguriert, eine Schwenkbewegung parallel zur virtuellen Ebene der Befestigungspunkte 81 des Straßentransportspitzenrahmens 80 durch zwei senkrecht angeordnete Achsen 83, die durch einen Zwischenrahmen 84 verbunden sind, zu gestatten.

## Patentansprüche

1. Wurzelrahmenanordnung (2) zum Transport von Rotorblättern (90) für eine Windturbine, die mit der Wurzel (91) eines Windturbinenrotorblatts (90) gekoppelt werden soll, die Folgendes umfasst:
- einen Straßentransportrahmen (3), der dazu konfiguriert ist, mit der Wurzel (91) eines Windturbinenrotorblatts (90) gekoppelt zu werden, Befestigungspunkte (30) zur Befestigung des Straßentransportrahmens (3) an einem Ladebett (96) eines Straßenfahrzeugs (95) auf der unteren Seite (32) des Rahmens (3) bereitstellt und eine Befestigungsmittellinie (31) zwischen der unteren und der oberen Seite (32, 33) des Rahmens (3) senkrecht zur virtuellen Linie, die die Befestigungspunkte (30) an der unteren Seite (32) verbindet, umfasst; und
- einen Seetransportrahmen (4), der lösbar mit dem Straßentransportrahmen (3) verbunden ist, Befestigungspunkte (40) zur Befestigung des Seetransportrahmens (4) an einem Ladebett eines Seefahrzeugs auf der unteren Seite (42) des Rahmens (4) bereitstellt und eine Befestigungsmittellinie (41) zwischen der unteren und der oberen Seite (42, 43) des Rahmens (4) senkrecht zur virtuellen Linie, die die Befestigungspunkte (40) verbindet, umfasst;
wobei die Befestigungsmittellinie (31) des Straßentransportrahmens (3) im Wesentlichen senkrecht zur Befestigungsmittellinie (41) des Seetransportrahmens (4) bei Verbindung damit ist.

2. Anordnung nach Anspruch 1, wobei die obere Seite (33, 43) des Seetransportrahmens (4) und/oder des Straßentransportrahmens (3) mit Verbindungspunkten (34, 44) zum Gestatten einer Verbindung mit den Befestigungspunkten (30, 40) eines anderen Seetransportrahmens (4) und/oder des Straßentransportrahmens (3) zur vertikalen Stapelung versehen ist.

3. Anordnung nach Anspruch 1 oder 2, wobei der Seetransportrahmen (4) und/oder der Straßentransportrahmen (3) Befestigungspunkte zur Befestigung des jeweiligen Rahmens (3, 4) an einem Ladebett auf der oberen Seite (33, 34) des Rahmens (3, 4) bereitstellen, wobei die virtuelle Linie, die diese Befestigungspunkte verbindet, senkrecht zu der jeweiligen Befestigungsmittellinie (31, 41) ist.

4. Anordnung nach einem der vorhergehenden Ansprüche, wobei mindestens ein Befestigungs- oder Verbindungspunkt (30, 40, 34, 44) als eine Aufnahme zur Aufnahme eines Verbindungsstifts (50) konfiguriert ist, die vorzugsweise Mittel zum Sichern des Stifts (50) in der Aufnahme umfasst.

5. Anordnung nach Anspruch 4, wobei ein Verbindungsstift (50) in einer Aufnahme eines Befestigungs- oder Verbindungspunkts (30, 40, 34, 44) vorgesehen ist, der mindestens ein Querloch (52) zur Befestigung von Hebezeug (54) daran aufweist.

6. Anordnung nach Anspruch 5, wobei ein Verbindungsstift (50) einen mittigen Bereich (51) umfasst, der im Gebrauch nicht von den Rahmen (3, 4), die mit dem Stift (50) verbunden sind, bedeckt wird, so dass er von einem Brückenverbindungsstück (55) zur horizontalen Verbindung benachbarter Wurzelrahmenanordnungen (2) umschlossen werden kann.

7. Anordnung nach einem der vorhergehenden Ansprüche, wobei die Verbindung zwischen dem Straßentransportrahmen (3) und dem Seetransportrahmen (4) dahingehend konstruiert ist, eine Schwenkbewegung um eine horizontale Achse von bis zu mindestens 3 Grad zu gestatten.

8. Anordnung nach einem der vorhergehenden Ansprüche, wobei der Straßentransportrahmen (3) austauschbare Adapter (35, 35') zum Koppeln der jeweiligen Wurzeln (91) verschiedener Arten von Windturbinenrotorblättern (90, 90') umfasst.

9. Anordnung nach einem der vorhergehenden Ansprüche, wobei der Straßentransportrahmen (3) und der Seetransportrahmen (4) dahingehend dimensioniert sind, in einen standardmäßigen ISO-Container zu passen, wobei vorzugsweise die Breite der unteren und der oberen Seite der Transportrahmen (3, 4) weniger als die Ladebreite eines standardmäßigen ISO-Containers beträgt.

10. Anordnung (1) zum Transport von Rotorblättern für eine Windturbine, die eine Wurzelrahmenanordnung (2) nach einem der Ansprüche 1 bis 9 und eine Spitzenklemmanordnung (6) zum Transport von Rotorblättern (90) für eine Windturbine, die um ein Rotorblatt (90) in der Nähe der Spitze (92) des Rotorblatts (90) geklemmt werden soll, umfasst, wobei die Spitzenklemmanordnung (6) Folgendes umfasst:
- eine Klemme (60) mit zwei Klemmenhälften (61), die jeweils eine Kontaktfläche (62) aufweisen, die zum formschlüssigen Klemmen des Rotorblatts (90) zwischen die beiden Klemmenhälften (61) an die Form des Rotorblatts (90) angepasst ist; und
- einen Seetransportspitzenrahmen (70), der Befestigungspunkte (71) zur Befestigung des Seetransportspitzenrahmens (70) an einem Ladebett eines Seefahrzeugs auf der unteren Seite (72) des Rahmens (70) bereitstellt und dazu konfiguriert ist, die Klemme (60) derart lösbar aufzunehmen, dass das Profil des eingeklemmten Rotorblatts (90) im Wesentlichen vertikal ausgerichtet ist;
oder
- einen Straßentransportspitzenrahmen (80), der Befestigungspunkte (81) zur Befestigung des Straßentransportspitzenrahmens (81) an einem Ladebett (96) eines Straßenfahrzeugs (95) auf der unteren Seite (82) des Rahmens (80) bereitstellt und dazu konfiguriert ist, die Klemme (60) derart lösbar aufzunehmen, dass das Profil des eingeklemmten Rotorblatts (90) im Wesentlichen horizontal ausgerichtet ist.

11. Anordnung nach Anspruch 10, wobei eine Verbindung zwischen der Klemme (60) und dem Seetransportspitzenrahmen (70) dazu konfiguriert ist, eine Schwenkbewegung parallel zur virtuellen Linie zwischen den Befestigungspunkten (71) des Seetransportspitzenrahmens (70) von bis zu 6 Grad und/oder eine translatorische Bewegung von bis zu 10 cm in Richtung (93) der Länge des eingeklemmten Rotorblatts (90) zu gestatten.

12. Anordnung nach Anspruch 10, wobei eine Verbindung zwischen der Klemme (60) und dem Straßentransportspitzenrahmen (80) dazu konfiguriert ist, eine Schwenkbewegung parallel zur virtuellen Linie zwischen den Befestigungspunkten des Straßentransportspitzenrahmens (80) von bis zu 6 Grad zu gestatten.

## Claims

1. Root frame arrangement (2) for the transport of rotor blades (90) for a wind turbine that are to be coupled to the root (91) of a wind turbine rotor blade (90), comprising the following:
- a road transport frame (3), which is configured to be coupled to the root (91) of a wind turbine rotor blade (90) and provides, on the bottom side (32) of the frame (3), fastening points (30) for fastening the road transport frame (3) to a load bed (96) of a road vehicle (95) and comprises a fastening midline (31) between the bottom and top sides (32, 33) of the frame (3), which fastening midline is perpendicular to the virtual line connecting the fastening points (30) on the bottom side (32); and
- a sea transport frame (4), which is connected releasably to the road transport frame (3) and provides, on the bottom side (42) of the frame (4), fastening points (40) for fastening the sea transport frame (4) to a load bed of a sea vessel and comprises a fastening midline (41) between the bottom and top sides (42, 43) of the frame (4), which fastening midline is perpendicular to the virtual line connecting the fastening points (40);
wherein the fastening midline (31) of the road transport frame (3) is substantially perpendicular to the fastening midline (41) of the sea transport frame (4) when connection of the latter to said road transport frame is realized.

2. Arrangement according to Claim 1, wherein the top side (33, 43) of the sea transport frame (4) and/or of the road transport frame (3) is provided with connection points (34, 44) for allowing connection to the fastening points (30, 40) of another sea transport frame (4) and/or the road transport frame (3) for the purpose of vertical stacking.

3. Arrangement according to Claim 1 or 2, wherein the sea transport frame (4) and/or the road transport frame (3) provide(s), on the top side (33, 34) of the frame (3, 4), fastening points for fastening the respective frame (3, 4) to a load bed, wherein the virtual line connecting said fastening points is perpendicular to the respective fastening midline (31, 41).

4. Arrangement according to one of the preceding claims, wherein at least one fastening or connection point (30, 40, 34, 44) is configured as a receptacle for receiving a connection pin (50), which preferably has means for securing the pin (50) in the receptacle.

5. Arrangement according to Claim 4, wherein a connection pin (50) is provided in a receptacle of a fastening or connection point (30, 40, 34, 44) and has at least one transverse hole (52) for fastening a lifting gear (54) thereto.

6. Arrangement according to Claim 5, wherein a connection pin (50) comprises a central region (51) which, during use, is not covered by the frames (3, 4) which are connected by way of the pin (50), so that it can be embraced by a bridge connection piece (55) for horizontal connection of adjacent root frame arrangements (2).

7. Arrangement according to one of the preceding claims, wherein the connection between the road transport frame (3) and the sea transport frame (4) is designed to allow a pivoting movement about a horizontal axis of up to at least 3 degrees.

8. Arrangement according to one of the preceding claims, wherein the road transport frame (3) comprises interchangeable adaptors (35, 35') for coupling the respective roots (91) of different types of wind turbine rotor blades (90, 90').

9. Arrangement according to one of the preceding claims, wherein the road transport frame (3) and the sea transport frame (4) are dimensioned so as to fit in a standard ISO container, wherein the width of the bottom and top sides of the transport frames (3, 4) is preferably less than the load width of a standard ISO container.

10. Arrangement (1) for the transport of rotor blades for a wind turbine, comprising a root frame arrangement (2) according to one of Claims 1 to 9 and a tip clamp arrangement (6) for the transport of rotor blades (90) for a wind turbine, which tip clamp arrangement is to be clamped around a rotor blade (90) in the vicinity of the tip (92) of the rotor blade (90), wherein the tip clamp arrangement (6) comprises the following:
- a clamp (60) having two clamp halves (61), which each have a contact surface (62) which, for the purpose of form-fitting clamping of the rotor blade (90) between the two clamp halves (61), is matched to the shape of the rotor blade (90); and
- a sea transport tip frame (70), which provides, on the bottom side (72) of the frame (70), fastening points (71) for fastening the sea transport tip frame (70) to a load bed of a sea vessel and is configured to releasably accommodate the clamp (60) in such a way that the profile of the clamped rotor blade (90) is oriented substantially vertically; or
- a road transport tip frame (80), which provides, on the bottom side (82) of the frame (80), fastening points (81) for fastening the road transport tip frame (81) to a load bed (96) of a road vehicle (95) and is configured to releasably accommodate the clamp (60) in such a way that the profile of the clamped rotor blade (90) is oriented substantially horizontally.

11. Arrangement according to Claim 10, wherein a connection between the clamp (60) and the sea transport tip frame (70) is configured to allow a pivoting movement parallel to the virtual line between the fastening points (71) of the sea transport tip frame (70) of up to 6 degrees and/or a translational movement of up to 10 cm in the direction (93) of the length of the clamped rotor blade (90) .

12. Arrangement according to Claim 10, wherein a connection between the clamp (60) and the road transport tip frame (80) is configured to allow a pivoting movement parallel to the virtual line between the fastening points of the road transport tip frame (80) of up to 6 degrees.

## Revendications

1. Agencement de cadres de racine (2) pour le transport de pales de rotor (90) pour une éolienne, qui doit être couplé avec la racine (91) d'une pale de rotor d'éolienne (90), comprenant :
- un cadre de transport par route (3), qui est configuré pour être couplé avec la racine (91) d'une pale de rotor d'éolienne (90), fournit des points de fixation (30) pour la fixation du cadre de transport par route (3) à un lit de chargement (96) d'un véhicule routier (95) sur le côté inférieur (32) du cadre (3) et comprend une ligne médiane de fixation (31) entre le côté inférieur et le côté supérieur (32, 33) du cadre (3) perpendiculairement à la ligne virtuelle qui relie les points de fixation (30) sur côté inférieur (32) ; et
- un cadre de transport par mer (4), qui est relié de manière amovible avec le cadre de transport par route (3), fournit des points de fixation (40) pour la fixation du cadre de transport par mer (4) à un lit de chargement d'un véhicule marin sur le côté inférieur (42) du cadre (4) et comprend une ligne médiane de fixation (41) entre le côté inférieur et le côté supérieur (42, 43) du cadre (4) perpendiculairement à la ligne virtuelle qui relie les points de fixation (40) ;
dans lequel la ligne médiane de fixation (31) du cadre de transport par route (3) est essentiellement perpendiculaire à la ligne médiane de fixation (41) du cadre de transport par mer (4) lors de la liaison.

2. Agencement selon la revendication 1, dans lequel le côté supérieur (33, 43) du cadre de transport par mer (4) et/ou du cadre de transport par route (3) est muni de points de liaison (34, 44) pour permettre une liaison avec les points de fixation (30, 40) d'un autre cadre de transport par mer (4) et/ou cadre de transport par route (3) pour l'empilement vertical.

3. Agencement selon la revendication 1 ou 2, dans lequel le cadre de transport par mer (4) et/ou le cadre de transport par route (3) fournissent des points de fixation pour la fixation du cadre respectif (3, 4) à un lit de chargement sur le côté supérieur (33, 34) du cadre (3, 4), la ligne virtuelle qui relie ces points de fixation étant perpendiculaire à la ligne médiane de fixation respective (31, 41) .

4. Agencement selon l'une quelconque des revendications précédentes, dans lequel au moins un point de fixation ou de liaison (30, 40, 34, 44) est configuré sous la forme d'un logement pour le logement d'une tige de liaison (50), qui comprend de préférence des moyens pour la sécurisation de la tige (50) dans le logement.

5. Agencement selon la revendication 4, dans lequel une tige de liaison (50) est prévue dans un logement d'un point de fixation ou de liaison (30, 40, 34, 44), qui comprend au moins un trou transversal (52) pour la fixation d'un dispositif de levage (54).

6. Agencement selon la revendication 5, dans lequel une tige de liaison (50) comprend une zone centrale (51), qui à l'usage n'est pas recouverte par les cadres (3, 4), qui sont reliés avec la tige (50), de telle sorte qu'elle puisse être entourée par une pièce de liaison de pontage (55) pour la liaison horizontale d'agencements de cadres de racine voisins (2).

7. Agencement selon l'une quelconque des revendications précédentes, dans lequel la liaison entre le cadre de transport par route (3) et le cadre de transport par mer (4) est construite de manière à permettre un mouvement de pivotement autour d'un axe horizontal de jusqu'à au moins 3 degrés.

8. Agencement selon l'une quelconque des revendications précédentes, dans lequel le cadre de transport par route (3) comprend des adaptateurs échangeables (35, 35') pour le couplage des racines respectives (91) de différents types de pales de rotor d'éolienne (90, 90').

9. Agencement selon l'une quelconque des revendications précédentes, dans lequel le cadre de transport par route (3) et le cadre de transport par mer (4) sont dimensionnés de manière à aller dans un conteneur ISO standard, la largeur du côté inférieur et du côté supérieur des cadres de transport (3, 4) étant de préférence inférieure à la largeur de chargement d'un conteneur ISO standard.

10. Agencement (1) pour le transport de pales de rotor pour une éolienne, qui comprend un agencement de cadres de racine (2) selon l'une quelconque des revendications 1 à 9 et un agencement de serrage de pointe (6) pour le transport de pales de rotor (90) pour une éolienne, qui doit être serré autour d'une pale de rotor (90) à proximité de la pointe (92) de la pale de rotor (90), l'agencement de serrage de pointe (6) comprenant :
- une pince (60) munie de deux moitiés de pince (61), qui comprennent chacune une surface de contact (62), qui est adaptée à la forme de la pale de rotor (90) pour le serrage par accouplement de forme de la pale de rotor (90) entre les deux moitiés de pince (61) ; et
- un cadre de pointe de transport par mer (70), qui fournit des points de fixation (71) pour la fixation du cadre de pointe de transport par mer (70) à un lit de chargement d'un véhicule marin sur le côté inférieur (72) du cadre (70) et est configuré pour loger de manière amovible la pince (60) de telle sorte que le profil de la pale de rotor serrée (90) soit orienté essentiellement verticalement ; ou
- un cadre de pointe de transport par route (80), qui fournit des points de fixation (81) pour la fixation du cadre de pointe de transport par route (81) à un lit de chargement (96) d'un véhicule routier (95) sur le côté inférieur (82) du cadre (80) et est configuré pour loger de manière amovible la pince (60) de telle sorte que le profil de la pale de rotor serrée (90) soit orienté essentiellement horizontalement.

11. Agencement selon la revendication 10, dans lequel une liaison entre la pince (60) et le cadre de pointe de transport par mer (70) est configurée de manière à permettre un mouvement de pivotement parallèlement à la ligne virtuelle entre les points de fixation (71) du cadre de pointe de transport par mer (70) de jusqu'à 6 degrés et/ou un mouvement de translation de jusqu'à 10 cm en direction (93) de la longueur de la pale de rotor serrée (90).

12. Agencement selon la revendication 10, dans lequel une liaison entre la pince (60) et le cadre de pointe de transport par route (80) est configurée de manière à permettre un mouvement de pivotement parallèlement à la ligne virtuelle entre les points de fixation du cadre de pointe de transport par route (80) de jusqu'à 6 degrés.
